(19) Europäisches Patentamt
European Patent Office
Office européen des brevets

(11) EP 1 486 544 A1

(12) **EUROPEAN PATENT APPLICATION**
published in accordance with Art. 158(3) EPC

(43) Date of publication:
**15.12.2004 Bulletin 2004/51**

(21) Application number: **03707112.3**

(22) Date of filing: **27.02.2003**

(51) Int Cl.[7]: **C09D 127/12**, F16J 15/08

(86) International application number:
**PCT/JP2003/002171**

(87) International publication number:
**WO 2003/076535 (18.09.2003 Gazette 2003/38)**

(84) Designated Contracting States:
**AT BE BG CH CY CZ DE DK EE ES FI FR GB GR HU IE IT LI LU MC NL PT SE SI SK TR**

(30) Priority: **27.02.2002 JP 2002052238**

(71) Applicant: **Daikin Industries, Ltd.**
**Osaka-shi, Osaka 530-8323 (JP)**

(72) Inventors:
- **KINOSHITA, Toshiyuki, c/o DAIKIN INDUSTRIES, LTD. Settsu-shi, Osaka 566-8585 (JP)**
- **TOMIHASHI, Nobuyuki, c/o DAIKIN INDUSTRIES, LTD. Settsu-shi, Osaka 566-8585 (JP)**
- **OGITA, Koichiro, c/o DAIKIN INDUSTRIES, LTD. Settsu-shi, Osaka 566-8585 (JP)**

(74) Representative: **HOFFMANN EITLE**
**Patent- und Rechtsanwälte**
**Arabellastrasse 4**
**81925 München (DE)**

# (54) FLUORORUBBER COATING COMPOSITION

(57) It is an object of the present invention to provide a one-pack type fluororubber coating composition which is a material based on a polyol-curable coating excellent in sealing performance and can directly form a rubber coat layer on the metal surface without using any primer and, further, can satisfy the performance characteristics required in auto engine evaluation, such as the antifreeze resistance, oil resistance and heat resistance.

The fluororubber coating composition of the present invention comprises a fluororubber, a polyol curing agent and a mercapto-group-containing metal compound each dissolved or dispersed in a liquid carrier.

EP 1 486 544 A1

## Description

TECHNICAL FIELD

The present invention relates to a fluororubber coating composition and, more particularly, to a fluororubber coating composition comprising a fluororubber, a polyol curing agent, a mecrapto group-containing metal compound and a liquid carrier.

BACKGROUND ART

Owing to their good heat resistance, oil resistance, solvent resistance and chemical resistance, among others, fluororubbers are widely used as industrial materials in the form of moldings or coatings as applied to or used for immersion of various substrates such as fabrics, fibers, metals, plastics and rubbers. In the field of engine gaskets, in particular, the use of fluororubber-coated metal gaskets as substitutes for asbestos materials has already begun and is expected to increase steadily in the future.

Coating materials for metal gaskets should not be affected by gaseous fluids under high temperature and high pressure conditions. They should retain sufficient elasticity and flexibility against temperatures and pressures and maintain sufficient tightening pressures necessary for preventing leakage through the interface. In addition, they should satisfy the antifreeze resistance and the engine oil resistance.

The fluororubber-based coatings currently used for metal gaskets include polyol-curable coatings, polyamine-curable coatings, and polyamine-polyol composite-curable coatings. The polyol-curable coatings are excellent in sealing characteristics but require the use of a primer for adhesion to substrates. Thus, they require two steps, namely the step of primer layer formation and the step of fluororubber layer formation.

When polyamine-curable coatings are used, the curing agent can internally contain a primer component and, therefore, the application process can be simplified. However, the coating compositions each occurs as a two-pack type formulation comprising the chief material and a curing agent, which are to be mixed up prior to use as a coating composition. Further, the compression set, which is one of the most important physical properties of sealants, is higher as compared with the polyol-curable coatings and, therefore, it becomes necessary to increase the tightening pressure so that any leak may not occur through the interface.

The polyamine-polyol composite-curable coatings can directly form rubber coat layers on the metal surface without using any primer and, further, can improve the antifreeze resistance of coatings and decrease permanent set in fatigue in the coating films resulting from long-term compression at high temperatures. However, they are two-pack type coating compositions and, therefore, it is necessary to mix up the chief composition and a curing agent prior to use.

SUMMARY OF THE INVENTION

It is an object of the present invention to provide a one-pack type fluororubber coating composition which is a material based on a polyol-curable coating excellent in sealing performance and capable of directly forming a rubber coat layer on the metal surface without using any primer and, further, can satisfy the performance characteristics required in auto engine evaluation, such as the antifreeze resistance, oil resistance and heat resistance.

The present invention provides a fluororubber coating composition wherein a fluororubber, a polyol curing agent and a mercapto-group-containing metal compound are dissolved or dispersed in a liquid carrier.

DETAILED DISCLOSURE OF THE INVENTION

In the following, the present invention is described in detail.

The components to be contained in the fluororubber coating composition of the present invention are described below.

Fluororubber

The fluororubber desirably comprises a fluorine-containing copolymer having a repeating unit represented by $-CH_2-$ in the main chain thereof. Typical examples thereof are vinylidene fluoride-based elastic fluorine-containing copolymers and, more specifically, copolymers whose main chain is composed of repeating units having the following respective structures:

At least one repeating unit selected from among $-CF_2-CH_2-$, $-CH_2-CH_2-$ and $-CH_2-CH(CH_3)-$, and
at least one repeating unit selected from among $-CF_2-CF(CF_3)-$, $-CF_2-CF_2-$, $-CF_2-CFCl-$, $-CF_2-CF(CF_2H)-$ and

$-CF_2-CF(OR_f^1)-$ (where $R_f^1$ is a fluoroalkyl group containing 1 to 9 carbon atoms).

As such fluorine-containing copolymer, there may be mentioned, among others, vinylidene fluoride-based copolymers such as vinylidene fluoride-hexafluoropropylene copolymers, vinylidene fluoride-tetrafluoroethylene-hexafluoropropylene copolymers; ethylene-hexafluoropropylene copolymers, and tetrafluoroethylene-propylene copolymers.

Such elastic fluorine-containing copolymers are commercially available under the trademarks "Dai-el" (trademark, products of Daikin Industries) , "Viton" (trademark, product of E. I. du Pont), "Aflas" (trademark, products of Asahi Glass Co.), etc. The fluororubber may comprise one single species or two or more species.

The elastic fluorine-containing copolymer preferably has a molecular weight of 5,000 to 200,000.

Preferred as the elastic fluorine-containing copolymer from the crosslinkability viewpoint is a vinylidene fluoride-based copolymer.

<u>Polyol curing agent</u>

As the polyol curing agent to be used in the fluororubber coating composition of the present invention, use may be made of the curing agents for polyol-curable fluororubbers which are in general use.

As the polyol curing agent in the practice of the present invention, there may be mentioned compounds having at least two hydroxyl groups, in particular phenolic hydroxyl groups, in each molecule and performing its function as a curing agent. This compound may be a macromolecular compound.

Preferred polyol curing agents are, for example,

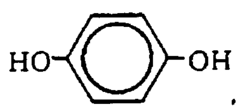 ,
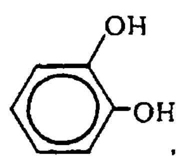 ,
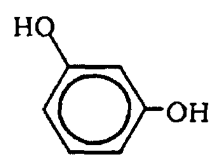 ,

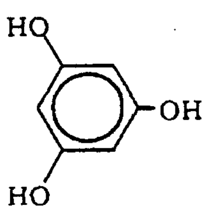 ,
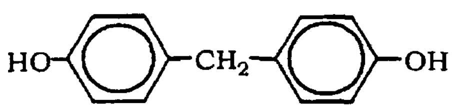 ,

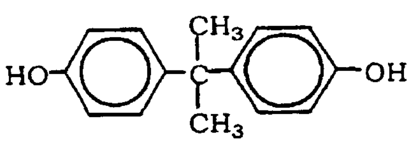 ,
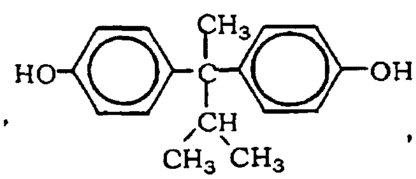 ,

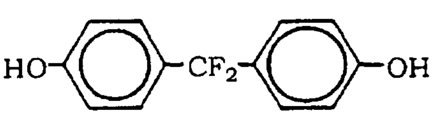 ,
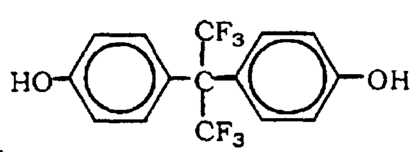

and like phenol compounds, and phenol resins represented by the following general formula:

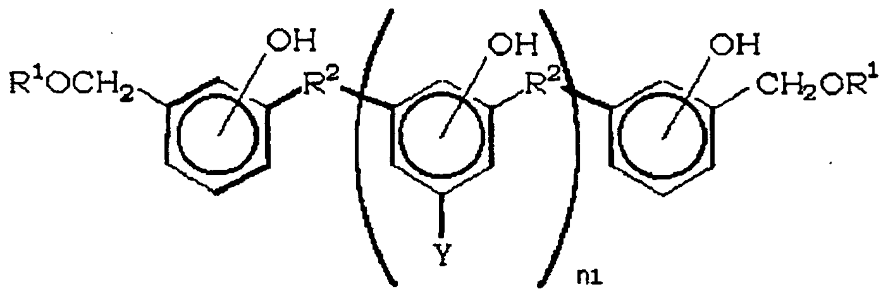

wherein Y represents a hydrogen atom, a halogen atom, $-R^1$, $-CH_2OR^1$ or $-OR^1$, $R^1$ represents an alkyl group containing 1 to 4 carbon atoms, $R^2$ represents $-CH_2-$ or $-CH_2OCH_2-$, n1 represents an integer of 0 to 100; n1 of Y groups may be the same or different and n1 of $R^2$ groups may be the same or different. The phenol compounds and phenol resins may be in the form of salts with basic compounds.

Preferred among them are bisphenol A, bisphenol AF, hydroquinone and like phenol derivatives, and salts thereof; polyhydroxy compounds having two or more enol type hydroxyl groups within the molecule, for example phenol resins, and salts thereof; compounds represented by the formula: $R_f^2(CH_2OH)_2$($R_f^2$ representing a perfluoroalkyl polyether group) and the like.

In addition to those mentioned above, any of those polyol curing agents for fluororubbers which are commercially available can be used as the above-mentioned polyol curing agent. The polyol curing agent may comprise one single species or two or more species.

When the liquid carrier to be specifically described later herein is an organic solvent, the polyol curing agent to be used is preferably soluble or dispersible in that organic solvent and, when the liquid carrier is water, it is preferably soluble or dispersible in water.

Preferably, the polyol curing agent is used in an amount of 0.1 to 20 parts by mass per 100 parts by mass of the solid matter in the fluororubber. A more preferred lower limit is 0.5 part by mass, and a more preferred upper limit is 5 parts by mass.

In this specification, the "solid matter in the fluororubber" means the residue of the fluororubber coating composition of the present invention not containing the melt-processable fluororesin to be added where desired, which is specifically described later herein, as remaining after drying at a temperature of 80-100°C, followed by 30-60 minutes of baking at 180-250°C.

<u>Mercapto-group-containing metal compound</u>

The mercapto-group-containing metal compound to be used in the practice of the present invention is a compound acting on the interface between the fluororubber, which is an organic material, and the substrate to be more specifically described later herein, which is an inorganic material, to form a firm bridge between both materials through chemical or physical bonding. It is used safely against the liquid carrier as well without contributing the curing of the fluororubber, in particular.

In the practice of the present invention, use is made of a mercapto-group-containing metal compound having at least one selected from the group consisting of Si, Al, Ti and Zr.

Preferred as the mercapto-group-containing metal compound are monomeric mercapto-group-containing silane compounds and oligomers thereof, monomeric mercapto-group-containing aluminum compounds and oligomers thereof, monomeric mercapto-group-containing titanium compounds and oligomers thereof, and monomeric mercapto-group-containing zirconium compounds and oligomers thereof, among others.

Preferred mercapto-group-containing silane compounds are represented by the general formula:

$$HSR^4(CH_2CH_2)SiZ_{n2}(OR^3)_{3-n2}$$

wherein n2 represents an integer of 0 to 2, $R^3$ represents an alkyl group containing 1 to 4 carbon atoms, Z represents an alkyl group containing 1 to 4 carbon atoms or a halogen atom, $R^4$ represents $-CH_2-$, $-CHR^5-$ or $-CR^5{}_2-$, $R^5$ represents

an alkyl group containing 1 to 4 carbon atoms, the two $R^5$s may be the same or different, n2 of Z groups may be the same or different and (3-2n) of $OR^3$ groups may be the same or different. Examples are monomers of γ-mercaptopropyltrimethoxysilane, γ-mercaptopropylmethyldimethoxysilane and like and oligomers thereof. Mercapto-group-containing silane coupling agents, for instance, can be used as the mercapto-group-containing silane compound. The mercapto-group-containing metal compound may comprise one single species or two or more species.

The level of addition of the mercapto-group-containing metal compound is preferably 0.5 to 30 parts by mass per 100 parts by mass of the solid matter in the fluororubber. A more preferred lower limit is 3 parts by mass, and a more preferred upper limit is 15 parts by mass.

Curing accelerator

For promoting the curing of the fluororubber coating composition of the present invention, a curing accelerator can also be used therein.

Usable as the curing accelerator are such compounds as described below:

> Alkyl and aralkyl quaternary ammonium salts such as trimethylbenzylammonium chloride, triethylbenzylammonium chloride, dimethyldecylbenzylammonium chloride, triethylbenzylammonium chloride, myristylbenzyldimethylammonium chloride, dodecyltrimethylammonium chloride, dimethyltetradecylbenzylammonium chloride, trimethyltetradecylammonium chloride, cocotrimethylammonium chloride, stearyltrimethylammonium chloride, distearyldimethylammonium chloride, tetrabutylammonium hydroxide, 1,4-phenylenedimethylenebistrimethylammonium dichloride, 1,4-phenylenedimethylenebistriethylammonium dichloride and ethylenebistriethylammonium dibromide; quaternary ammonium salts such as quaternary 1,8-diazabicyclo[5.4.0]-7-undecenium salts, for example 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methylsulfate, 8-methyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5.4.0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride, 8-benzyl-1,8-diazabicyclo[5.4.0]-7-undecenium hydroxide, 8-phenethyl-1,8-diazabicyclo[5.4.0]-7-undecenium chloride, and 8-(3-phenylpropyl)- 1,8-diazabicyclo[5.4.0]-7-undecenium chloride; tertiary amines such as trimethylamine, triethylamine, tri-n-propylamine, tri-n-butylamine, triisobutylamine, methyldiethylamine, dimethylethylamine, dimethyl-n-propylamine, dimethylisopropylamine, dimethyl-n-butylamine, dimethylisobutylamine, dimethyl-sec-butylamine, dimethyl-tert-butylamine, triallylamine, diallylmethylamine, allyldimethylamine, benzyldimethylamine, benzyldiethylamine, N-ethylpiperidine, N-butylpiperidine, N-allylpiperidine, N-methylpyrrolidine, N-ethylpyrrolidine, N-n-butylpyrrolidine, N-cyclohexylpyrrolidine, N-benzylpyrrolidine and 2,4,6-trimethylpyridine; and quaternary phosphonium salts such as triphenylphosphine benzyl chloride.

Although certain levels of physical characteristics can be secured without using any curing accelerator, the addition of a curing accelerator result in improvements in physical characteristics. The level of addition of the curing accelerator is 0 to 10 parts by mass per 100 parts by mass of the solid matter in the fluororubber. A preferred lower limit is 0.1 part by mass, a more preferred lower limit is 0.3 part by mass, and a preferred upper limit is 5 parts by mass.

Liquid carrier

In this specification, the liquid carrier means a liquid capable of dissolving or dispersing the components other than the liquid carrier in the fluororubber coating composition of the present invention. An organic solvent and/or water can be used as the liquid carrier.

The organic solvent includes, among others, ketones such as methyl ethyl ketone and methyl isobutyl ketone; esters such as butyl acetate and isopentyl acetate; ethers such as diethylene glycol dimethyl ether; hydrocarbons such as toluene and xylene; and amides such as N,N-dimethylacetamide and N-methyl-2-pyrrolidone. The organic solvent is preferably used in an amount of 40 to 90% by mass relative to the total mass of the fluororubber coating composition of the present invention.

When water is used as the liquid carrier, a dispersant is used for dispersing the fluororubber and the fluororesin to be described later herein in water to give an aqueous dispersion.

As the dispersant, there may be mentioned anionic surfactants such as lauryl sulfate salts, perfluoroalkylcarboxylic acid salts and ω-hydroperfluoroalkylcarboxylic acid salts; nonionic surfactants such as polyethylene glycol derivatives and polyethylene glycol/polypropylene glycol derivatives; and resin-based dispersants such as alkylpolyethylene glycol ethers, alkylphenylpolyethylene glycol ethers, alkylpolyethylene glycol esters, ethylene glycol/propylene

glycol copolymers, polyethylene glycol alkyl esters and polycarboxylic acid salts.

The liquid carrier may comprise one single species or two or more species, and the use of an organic solvent is preferred.

Fluororesin

A melt-processable fluororesin can be added to the fluororubber coating composition of the present invention. The melt-processable fluororesin is a fluororesin having a melting point not higher than 320°C and includes, among others, such fluororesins as mentioned below.

Tetrafluoroethylene [TFE]/hexafluoropropylene [HFP] copolymers [FEPs], tetrafluoroethylene/perfluoro(alkylvinyl - ether) [PFVE] copolymers [PFAs], tetrafluoroethylene/hexafluoropropylene/perfluoro(alkyl - vinylether) copolymers [EPAs], tetrafluoroethylene/chlorotrifluoroethylene [CTFE] copolymers [PCTFEs], tetrafluoroethylene/ethylene copolymers [ETFEs], polyvinylidene fluoride [PVdF], polytetrafluoroethylene with a molecular weight of not higher than 300,000 [LMW-PTFE], and the like.

As the PFVEs mentioned above, there may be mentioned the compounds represented by the following formulas (1) to (5):

Formula (1): $CF_2{=}CFO(CF_2)_{n3}CF_3$ (n3 = 1 to 9);

Formula (2): $CF_2{=}CFO(CF_2CF_2CF_2O)_{n4}\text{-}CF_2CF_2CF_3$ ($1 \leq n4 \leq 5$);

Formula (3): $CF_2{=}CFO[CF_2CF(CF_3)]_{n5}\text{-}CF_2CF_2CF_3$ ($1 \leq n5 \leq 5$);

Formula (4): $CF_2{=}CFO[CF_2CF(CF_3)]_{n6}\text{-}CF_2CF_2CH_2I$ ($1 \leq n6 \leq 5$);

Formula (5): $CF_2{=}CFOCFOCH_2(CF_2)_{n7}X$ (n7 = 1 to 12, X = H, F or Cl).

From the non-tackiness and surface smoothness viewpoint, FEPs, PFAs or EPAs are preferred as the fluororesin. The fluororesin may comprise one single species or two or more species.

The fluororesin can be used in preparing the fluororubber coating composition of the present invention in the form of an aqueous dispersion prepared by dispersing the dispersion as obtained by emulsion polymerization using water or a like medium and a dispersant or in the form of an organosol prepared by phase inversion of that dispersion into an organic solvent.

In cases where the fluororesin is used, the solid matter mass ratio between the fluororubber and fluororesin (fluororubber:fluororesin) is generally 95:5 to 20:80, preferably 90:10 to 30:70. The solid matter in the fluororesin means the residue after drying of the above-mentioned aqueous dispersion or organosol at a temperature of 80-100°C, followed by 30-60 minutes of baking at 180-250°C.

When the proportion of the fluororubber exceeds the above upper limit, the effects of addition of the fluororesin, such as non-tackiness and wear resistance, will not be produced and, at a level below the above lower limit, the elasticity of the fluororubber will be lost and, in addition, such defects as cracks will appear in the coating films in some instances.

Stabilizer

A stabilizer can be added to the fluororubber coating composition of the present invention for the purpose of improving the storage stability thereof. Usable as the stabilizer are organic acids containing 1 to 12 carbon atoms, preferably organic acids containing 1 to 4 carbon atoms. Preferred organic acids are monocarboxylic acids such as formic acid, acetic acid and propionic acid; and dicarboxylic acids such as oxalic acid, malonic acid and succinic acid, among others.

Various additives

In the fluororubber coating composition of the present invention, there may be incorporated, in addition to the components mentioned above, one or more of various additives generally used in the compositions for fluororubber-based coatings, for example fillers, colorants, and acid acceptors.

As the fillers, there may be mentioned carbon black, molybdenum disulfide, white carbon, calcium carbonate, barium sulfate, talc, calcium silicate and the like. As the colorants, there may be mentioned, among others, inorganic pigments such as composite oxide pigments.

The acid acceptors include magnesium oxide, lead oxide, zinc oxide, lead carbonate, zinc carbonate, hydrotalcite and other double salts. Generally, the acid acceptors can be incorporated in an amount of 1 to 40 parts by mass per 100 parts by mass of the solid matter in the fluororubber according to their activity.

The fluororubber coating composition of the present invention can be prepared in the same manner as in preparing the conventional compositions for fluororubber-based coatings.

The fluororubber coating composition of the present invention can be applied to articles to be coated by the conventional method of application and, after sufficient drying and the subsequent baking by heating, coating films are formed.

The article substrates as the substrates to be coated with, on which the fluororubber coating compositions of the present invention are coated, are for example metals such as iron, stainless steel, copper, aluminum and brass; glass products such as glass sheets, glass fiber-derived woven fabrics and nonwoven fabrics; moldings made of and articles coated with general-purpose resins and heat resistant resins, including polypropylene, polyoxymethylene, polyimides, polyamideimides, polysulfones, polyethersulfones and polyetheretherketones; moldings made of and articles coated with general-purpose rubbers such as SBR, butyl rubber, NBR and EPDM; moldings made of and articles coated with heat-resistant rubbers such as silicone rubbers and fluororubbers; and woven fabrics and nonwoven fabrics made of natural fibers and synthetic fibers. The fluororubber coating composition of the present invention is excellent in adhesion to metals, in particular.

As for the method of forming coating films using the fluororubber coating composition of the present invention, the method of coating the ordinary coating compositions can be employed and can be carried out in the following manner.

First, the surface of the article to be coated is preferably degreased and washed to a sufficient extent prior to application of the fluororubber coating composition of the present invention.

The fluororubber coating composition of the present invention is applied to an article to be coated by spray coating, flow coating, dispenser coating, screen coating, brushing, or dip coating, for instance, and the coated article is sufficiently dried in an atmosphere at about 100°C to evaporate the medium, including the liquid carrier.

Then, baking is carried out, for example, at 150-250°C for 0.5-24 hours, whereby the fluororubber in the fluororubber coating composition is sufficiently cured and the reaction gas and water vapor are driven out of the system.

The coating films formed from the fluororubber coating composition of the present invention are excellent in antifreeze resistance, oil resistance, heat resistance and sealing performance, hence are suited for metal gaskets. Forming coating films on such article substrates as mentioned above enables uses in those fields in which solvent resistance, lubricity and non-stickiness are required and, as the uses thereof, there may be mentioned, among others, seats and belts; O-rings, diaphragms, chemical-resistant tubes, fuel hoses, valve seals, gaskets for chemical plants, engine gaskets; rollers (e.g. fixing rollers, pressure rollers) and conveyor belts in OA machines and apparatus, such as copiers, printers and facsimiles. As the engine gaskets, there may be mentioned, for example, head gaskets of auto engines.

A coated article having a coating film formed from the fluororubber coating composition mentioned above on a metal surface also constitutes an aspect of the present invention.

As the metals mentioned above, there may be mentioned metal plates, forinstance. These metal plates can be converted to coated articles having a coating film formed from the above-mentioned fluororubber coating composition by the above-mentioned method of forming coating films. The coating film as mentioned above may be formed on one side or on both sides of the metal plates.

Preferred as the coated article of the present invention are materials for auto engine gaskets.

BEST MODES FOR CARRYING OUT THE INVENTION

The following examples illustrate the present invention in further detail. These examples are, however, by no means limitative of the scope of the present invention.

Example 1

Preparation of a fluororubber coating composition:

First, 100 mass parts, on the solid basis, of a fluororubber (trademark: Dai-el G-801, product of Daikin Industries) was kneaded on an open roll, together with 20 mass parts of MT carbon black, 5 mass parts of an acid acceptor (trademark: Hydrotalcite DHT-4A, product of Kyowa Chemical Industry) to give a compound. This compound was dissolved in a mixed solvent composed of 400 mass parts of butyl acetate and 400 mass parts of methyl isobutyl ketone.

Separately, 2 mass parts of bisphenol AF as a polyol curing agent and 0.5 mass part of DBU-b (8-benzyl-1,8-diazabicyclo[5.4.0]-7-undecenium chloride) as a curing accelerator were dissolved in 17.5 mass parts of ethanol, and 2 mass parts of acetic acid, 4 mass parts of xylene and 5 mass parts of a mercapto-group-containing silane coupling agent oligomer, namely X-41-1805 (trademark, active ingredient 100%, product of Shin-Etsu Chemical) were added thereto. The resulting solution and the compound solution prepared in advance were mixed up by a Disper homogenizer to give a fluororubber coating composition.

Coated article making:

The above fluororubber coating composition was applied to a SUS 301 plate washed in advance with acetone by a 16-mill applicator. After air-drying, the coated plate was dried at 80-100°C for 30 minutes and then baked at 200°C for 30 minutes.

Comparative Example 1

Preparation of a coating:

The procedure of Example 1 was followed in the same manner except that the mercapto-group-containing silane coupling agent oligomer used in Example 1 was not used.

Coated plate making:

A SUS 301 plate washed in advance with acetone was dip-coated with a commercial fluororubber-based primer, followed by 30 minutes of preliminary drying at 80-100°C. After returning to room temperature, the above coating was applied to the plate by a 16-mill applicator. After air-drying, the coated plate was dried at 80-100°C for 30 minutes and then baked at 200°C for 30 minutes.

Comparative Example 2

Preparation of a fluororubber solution:

100 mass parts, on the solid basis, of a fluororubber (trademark: Dai-el G-801, product of Daikin Industries) was kneaded on an open roll, together with 20 mass parts of MT carbon black, 5 mass parts of an acid acceptor (trademark: Hydrotalcite DHT-4A, product of Kyowa Chemical Industry) to give a compound. This compound was dissolved in a mixed solvent composed of 400 mass parts of butyl acetate and 400 mass parts of methyl isobutyl ketone to give a fluororubber solution.

Preparation of a curing agent:

A curing agent was prepared by dissolving 15 mass parts of an amine-curable silane coupling agent in 85 mass parts of butanol.

Preparation of a coating:

A coating was prepared by mixing up the above fluororubber solution and curing agent using a Disper homogenizer.

Coated plate making:

The above coating was applied to a SUS 301 plate washed in advance with acetone by 16-mill applicator.

After preliminary drying, the coated plate was dried at 80-100°C for 30 minutes and then baked at 200°C for 30 minutes.

Comparative Example 3

Preparation of a fluororubber coating composition:

100 mass parts, on the solid basis, of a fluororubber (trademark: Dai-el G-801, product of Daikin Industries) was kneaded on an open roll, together with 20 mass parts of MT carbon black, 5 mass parts of an acid acceptor (trademark: Hydrotalcite DHT-4A, product of Kyowa Chemical Industry) to give a compound. This compound was dissolved in a mixed solvent composed of 400 mass parts of butyl acetate and 400 mass parts of methyl isobutyl ketone.

Separately, 2 mass parts of bisphenol AF as a polyol curing agent and 0.5 mass part of DBU-b (8-benzyl-1,8-diazabicyclo[5.4.0]-7-undecenium chloride) as a curing accelerator were dissolved in 17.5 mass parts of ethanol, and 2 mass parts of acetic acid and 4 mass parts of xylene were added to the solution. The resulting solution and the compound solution prepared in advance were mixed up by a Disper homogenizer to give a chief composition.

Preparation of a curing agent:

A curing agent was prepared by dissolving 15 mass parts of an amine-curable silane coupling agent in 85 mass parts of butanol.

Preparation of a coating:

A coating was prepared by mixing up the above chief composition and curing agent using a Disper homogenizer.

Coated plate making:

The above coating was applied to a SUS 301 plate washed in advance with acetone by a 16-mill applicator. After preliminary drying, the coated plate was dried at 80-100°C for 30 minutes and then baked at 200°C for 30 minutes.

The coated article produced in Example 1 and the coated plates produced in Comparative Examples 1 to 3 were used as test specimen plates, and antifreeze resistance, oil resistance, heat resistance and the pot life were evaluated in the following manner.

<Antifreeze resistance>

A commercial long life coolant (LLC) was dissolved in water to give a 50% (by volume) of aqueous solution. The test specimen plates were immersed in the thus-prepared aqueous solution at 120°C for 500 hours.

After immersion, the coating film surfaces were observed by the eye for the presence or absence of blistering and/or the like, and the adhesion of coating films was evaluated by the cross-cut adhesion test.

When there were no changes in coating film appearances, the test specimen plate was evaluated as "○"; when blistering and/or the like was found in part, as "Δ"; when blistering and/or the like was found all over the surface, as "X".

As for the cross-cut adhesion test, tape peeling was carried out using a Sellotape (trademark) and, when the number of remaining squares was 100/100, the plate was evaluated as "○"; when 90-99/100, as "Δ"; when 89/100 or less, as "X".

<Oil resistance>

The test specimen plates were immersed in IRM 903 oil at 150°C for 500 hours.

After immersion, the coating film surfaces were observed by the eye for the presence or absence of blistering and/or the like, and the adhesion of coating films were evaluated by the cross-cut adhesion test.

When there were no changes in coating film appearances, the test specimen plate was evaluated as "○"; when blistering and/or the like was found in part, as "Δ"; when blistering and/or the like was found all over the surface, as "X".

As for the cross-cut adhesion test, tape peeling was carried out using a Sellotape (trademark) and, when the number of remaining squares was 100/100, the plate was evaluated as "○"; when 90-99/100, as "Δ"; when 89/100 or less, as "X".

<Heat resistance>

The test specimen plates were heated at 200°C for 500 hours.

After testing, the coating film surfaces were observed by the eye for the presence or absence of blistering and/or the like, and the adhesion of the coating films was evaluated by the cross-cut adhesion test.

When there were no changes in coating film appearances, the test specimen plate was evaluated as "○"; when blistering and/or the like was found in part, as "Δ"; when blistering and/or the like was found all over the surface, as "X".

As for the cross-cut adhesion test, tape peeling was carried out using a Sellotape (trademark) and, when the number of remaining squares was 100/100, the plate was evaluated as "○"; when 90-99/100, as "Δ"; when 89/100 or less, as "X".

<Pot life of coatings>

Each coating placed in a tightly closed container was maintained at 40°C for 24 hours and then cooled to 25°C, and the change in viscosity of the coatings was evaluated.

When the change in viscosity was less than twice the initial viscosity, the coatings were evaluated as "○" and, when the viscosity increment was more than twice the initial viscosity, as "X".

The results obtained for these evaluation items are shown in Table 1.

Table 1

| | Curing system | Primer | Antifreeze resistance | Oil resistance | Heat resistance | Pot life |
|---|---|---|---|---|---|---|
| Example 1 | Polyol | Contained in cating composition | ○ | ○ | ○ | ○ |
| Comparative example 1 | Polyol | Separate treatment necessary | Δ | ○ | ○ | ○ |
| Comparative example 2 | Polyamine | Contained in cating composition | ○ | ○ | ○ | × |
| Comparative example 3 | Polyamine/ polyol composite curing system. | Contained in cating composition | ○ | ○ | ○ | × |

From Table 1, it was found that Comparative Example 1 is inferior in antifreeze resistance, Comparative Examples 2 and 3 are inferior in pot life whereas Example 1 shows good results with respect to all the evaluation items.

INDUSTRIAL APPLICABILITY

The fluororubber coating composition of the present invention, which has the constitution described above, can be obtained as a one-pack formulation based on a polyol-curable coating excellent in sealing performance and capable of forming a rubber coat layer directly on metals without using any primer, and the coated article of the present invention can satisfy such performance characteristics as antifreeze resistance, oil resistance and heat resistance which are required in auto engine evaluation.

**Claims**

1. A fluororubber coating composition
wherein a fluororubber, a polyol curing agent and a mercapto-group-containing metal compound were dissolved or dispersed in a liquid carrier.

**2.** The fluororubber coating composition according to Claim 1,
wherein the mercapto-group-containing metal compound has at least one selected from the group consisting of Si, Al, Ti and Zr.

**3.** The fluororubber coating composition according to Claim 1 or 2,
wherein the polyol curing agent amounts to 0.1 to 20 parts by mass and the mercapto-group-containing metal compound to 0.5 to 30 parts by mass per 100 parts by mass of a solid matter in the fluororubber.

**4.** The fluororubber coating composition according to Claim 1, 2 or 3
which further comprises a fluororesin.

**5.** The fluororubber coating composition according to Claim 4,
wherein the fluororesin comprises a tetrafluoroethylene/hexafluoropropylene copolymer, a tetrafluoroethylene/perfluoro(alkylvinylether) copolymer and/or a tetrafluoroethylene/hexafluoropropylene/perfluoro (alkylvinylether) copolymer.

**6.** A coated article
which has a coating film formed from the fluororubber coating composition according to Claim 1, 2, 3, 4 or 5 on a metal surface.

**7.** The coated article according to Claim 6 which is a material for an auto engine gasket.

# INTERNATIONAL SEARCH REPORT

International application No.
PCT/JP03/02171

A. CLASSIFICATION OF SUBJECT MATTER
Int.Cl$^7$ C09D127/12, F16J15/08

According to International Patent Classification (IPC) or to both national classification and IPC

B. FIELDS SEARCHED

Minimum documentation searched (classification system followed by classification symbols)
Int.Cl$^7$ C09D127/12, F16J15/08

Documentation searched other than minimum documentation to the extent that such documents are included in the fields searched

Electronic data base consulted during the international search (name of data base and, where practicable, search terms used)
CAS ONLINE(STN), WPI/L(DIALOG)

C. DOCUMENTS CONSIDERED TO BE RELEVANT

| Category* | Citation of document, with indication, where appropriate, of the relevant passages | Relevant to claim No. |
|---|---|---|
| X<br>Y | JP 1-142071 A (Kabushiki Kaisha Nomura Mekki), 02 June, 1989 (02.06.89), Claims; page 3, upper left column, line 8 to lower left column, line 7; page 4, upper left column, line 8 to upper right column, line 3; table 1, the last line; table 3, the last line (Family: none) | 1,2,4,6<br>3,5,7 |
| X<br>Y | JP 10-147746 A (DAIKIN INDUSTRIES, LTD.), 02 June, 1998 (02.06.98), Claims; Par. Nos. [0027], [0030], [0058], [0062] to [0063] (Family: none) | 1,4,6<br>2,3,5,7 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 June, 2003 (20.06.03) | 08 July, 2003 (08.07.03) |
| Name and mailing address of the ISA/<br>Japanese Patent Office<br>Facsimile No. | Authorized officer<br><br>Telephone No. |

Form PCT/ISA/210 (second sheet) (July 1998)

**INTERNATIONAL SEARCH REPORT**

International application No.
PCT/JP03/02171

C (Continuation). DOCUMENTS CONSIDERED TO BE RELEVANT

| Category* | Citation of document, with indication, where appropriate, of the relevant passages | Relevant to claim No. |
|---|---|---|
| Y | EP 894837 A1 (DAIKIN INDUSTRIES, LTD.), 03 February, 1999 (03.02.99), Claims; Par. Nos. [0015], [0032], [0045] to [0046] & WO 97/39071 A1 | 1-7 |
| Y | WO 01/85858 A1 (DAIKIN INDUSTRIES, LTD.), 15 November, 2001 (15.11.01), Claims; page 8, lines 20 to 27; page 13, line 8 & JP 2002-338872 A | 1-7 |
| Y | EP 690096 A1 (DAIKIN INDUSTRIES, LTD.), 03 January, 1996 (03.01.96), Claims; page 4, lines 4 to 6, 48 to 52 & JP 6-264021 A1 & US 5700861 A & WO 94/21729 A1 | 1-7 |
| Y | US 6183869 A (Fuji Xerox Co., Ltd.), 06 February, 2001 (06.02.01), Claims; Column 6, line 36 to column 7, line 11; column 23, lines 25 to 42 & JP 10-305537 A | 1-7 |
| Y | EP 480089 A (DAINICHISEIKA COLOR & CHEMICALS MFG. CO., LTD.), 15 April, 1992 (15.04.92), Claims; page 8, line 47 to page 9, line 30 & JP 2-286761 A | 1-7 |
| Y | JP 2000-265282 A (Nippon Steel Corp.), 26 September, 2000 (26.09.00), Claims; Par. No. [0011] (Family: none) | 1-7 |

Form PCT/ISA/210 (continuation of second sheet) (July 1998)